# FASCICULE DE BREVET EUROPEEN

(11) **EP 4 211 504 B1**
(45) Date de publication et mention de la délivrance du brevet: **02.10.2024**
(21) Numéro de dépôt: 21785932.1
(22) Date de dépôt: 10.09.2021
(51) Int. Cl.: G02B 6/44

(54) **JOINT D'ÉTANCHÉITÉ D'UN BOÎTIER D'ÉPISSURAGE POUR CÂBLE**
DICHTUNG FÜR EINE KABELSPLEISSBOX
SEAL FOR A CABLE SPLICE BOX

(30) Priorité: 10.09.2020 FR 2009187
(43) Date de publication de la demande: 19.07.2023
(73) Titulaire: ACOME, 75014 Paris (FR)
(72) Inventeur: ANFRAY, Christophe, 50140 Mortain Bocage (FR); CHEVALIER, Pacôme, 35140 Méziéres sur Couesnon (FR)
(74) Mandataire: Regimbeau
(86) Numéro de dépôt international: PCT/FR2021/051551
(87) Numéro de publication internationale: WO 2022/053766

(56) Documents cités:
- FR-A1- 2 469 782
- FR-A2- 2 492 151
- JP-A- 2006 158 172
- US-A- 5 825 960
- US-B1- 6 314 229

## Description

### DOMAINE DE L'INVENTION

La présente invention concerne un joint d'étanchéité, trouvant avantageusement application dans un boîtier d'épissurage pour un câble optique.

### ETAT DE LA TECHNIQUE

Un câble optique conventionnel comprend une pluralité de modules optiques et une gaine entourant les modules optiques.

On connaît de l'état de la technique un boîtier d'épissurage comprenant conventionnellement un joint d'étanchéité définissant un orifice de passage pour un tel câble optique, entre l'extérieur et un espace ménagé à l'intérieur du boîtier. Des joints d'étanchéité sont en particulier décrits dans les documents FR2492151 et US 6,314,229.

Dans cet espace, un ou plusieurs modules optiques du câble sont extraits hors de la gaine en vue d'un épissurage.

Il est important de protéger les modules optiques d'agressions extérieures, notamment de l'humidité, d'où la présence du joint d'étanchéité dans le boîtier d'épissurage. Ce problème est particulièrement critique dans le cas où le boîtier est immergé.

Si le câble optique présente un diamètre parfaitement égal au diamètre de l'orifice défini par le joint d'étanchéité, le câble obture parfaitement cet orifice, si bien qu'aucune humidité ne peut atteindre l'espace ménagé à l'intérieur du boîtier en passant par cet orifice.

Si le câble optique présente un diamètre inférieur au diamètre de l'orifice défini par le joint d'étanchéité, un jour est laissé entre le joint et le câble traversant l'orifice ; dans ce cas, l'espace à l'intérieur du boîtier n'est pas isolé de l'extérieur de manière étanche. En particulier, si les deux gorges sont semi-circulaires, et si le câble est de section circulaire, un jour en forme de croissant peut apparaitre.

A l'opposé, si le câble optique présente un diamètre supérieur au diamètre de l'orifice défini par le joint d'étanchéité, celui-ci ne peut pas en principe être engagé jusqu'au fond de la gorge. Néanmoins, lorsque l'orifice est formé par rapprochement mutuel de deux gorges formées dans deux parois déformables, l'engagement à force d'un câble de diamètre légèrement supérieur au diamètre dans l'orifice reste possible. Par exemple, on peut dans un premier temps poser un tel câble sur l'une des deux gorges, puis poser la deuxième gorge sur le câble. A ce stade, le câble est encore à distance des fonds respectifs des deux gorges en raison de son diamètre. Ensuite, on peut presser les deux parois l'une vers l'autre, de sorte à déformer les deux parois et ainsi forcer le câble à toucher les fonds respectifs des deux gorges. Or, la déformation des parois est susceptible d'entraîner l'apparitions de deux jours latéraux situés de part et d'autre du câble. Par exemple, si les deux gorges sont semi-circulaires avant déformation, l'orifice obtenu après déformation des deux parois peut présenter un profil en forme d'oeil.

### EXPOSE DE L'INVENTION

Un but de l'invention est d'étanchéifier un boîtier de manière satisfaisante, lorsque l'on engage des câbles de diamètres différents dans ce boîtier.

L'invention propose, selon un premier aspect, un joint d'étanchéité selon la revendication 1.

Comme les bossages délimitent entre eux la première gorge, un câble engagé dans cette première gorge s'étend entre ces deux bossages. Les deux bossages permettent dès lors de combler les deux jours latéraux discutés en introduction, susceptibles d'apparaître de part et d'autre d'un câble de diamètre légèrement supérieur au diamètre de l'orifice. Ces deux bossages permettent également de combler les jours en forme de croissant pouvant apparaître dans le cas où le câble présente un diamètre inférieur à celui de l'orifice.

Le joint d'étanchéité selon le premier aspect peut présenter les caractéristiques optionnelles suivantes, prises seules ou en combinaison chaque fois que cela est techniquement possible.

De préférence, chaque bossage présente une surface concave délimitant la première gorge, et a une forme adaptée pour qu'un rayon de courbure de la surface concave se réduise sous l'effet de l'effort de compression.

De préférence, la partie définit au moins une rainure débouchant dans la cavité, la rainure s'étendant parallèlement à l'axe de passage.

De préférence :
- la deuxième paroi comprend deux autres bossages déformables délimitant entre eux la deuxième gorge, et ayant des formes adaptées pour se rapprocher d'un câble engagé à travers l'orifice sous l'effet d'un effort de compression exercé sur les autres bossages par la première paroi dans la direction de compression perpendiculaire à l'axe de passage, lorsque que les deux parois sont dans la position jointive.

De préférence, le joint comprend par ailleurs une troisième paroi et une quatrième paroi adaptées pour adopter, pendant que la première paroi et la deuxième paroi sont dans la position jointive :
- une configuration fermée dans laquelle la troisième paroi et la quatrième paroi forment ensemble une cloison étanche,
- une configuration ouverte dans laquelle la troisième paroi et la quatrième paroi forment ensemble un orifice propre à être traversé par un câble traversant simultanément l'orifice formé par la première gorge et la deuxième gorge.

De préférence, la troisième paroi et la quatrième paroi sont adaptées pour passer de la configuration fermée à la configuration ouverte en se déformant sous l'effet d'une compression exercée par le câble sur la troisième paroi et sur la quatrième paroi.

De préférence, le joint d'étanchéité comprend :
- une base comprenant une parmi la première paroi et la deuxième paroi, et une parmi la troisième paroi et la quatrième paroi,
- un couvercle comprenant l'autre parmi la première paroi et la deuxième paroi, et l'autre parmi la troisième paroi et la quatrième paroi.

De préférence, la première paroi, la deuxième paroi, la troisième paroi et la quatrième paroi sont agencées pour que les deux orifices puissent être alignés dans la position jointive.

De préférence, le joint d'étanchéité comprend au moins une paire supplémentaire de parois adaptée pour définir un orifice propre à être traversé par un câble traversant simultanément l'orifice formé par la première gorge et la deuxième gorge, ainsi que l'orifice formé par la troisième paroi et la quatrième paroi.

L'invention propose également, selon un deuxième aspect, un dispositif d'épissurage d'un câble, tel qu'un câble optique, le dispositif d'épissurage comprenant un joint d'étanchéité selon le premier aspect agencé entre l'extérieur du dispositif et un espace ménagé à l'intérieur du dispositif.

L'invention propose en outre, sur un troisième aspect, un procédé comprenant :
- engager un câble, tel qu'un câble optique, à travers la première gorge d'un joint d'étanchéité selon le premier aspect,
- positionner la première paroi et la deuxième paroi du joint d'étanchéité dans la position jointive, de sorte que le câble traverse l'orifice défini par la première gorge et la deuxième gorge,
- comprimer les parois l'une vers l'autre, alors que les deux parois sont dans la position jointive, de sorte que la deuxième paroi exerce un effort de compression sur les bossages dans une direction de compression perpendiculaire à l'axe de passage, de sorte à rapprocher les bossages vers le câble et ainsi obstruer de manière étanche la première gorge.

Au cours de ce procédé, la compression est préférentiellement réalisée de sorte que la deuxième paroi exerce un effort de compression sur les bossages dans la direction de compression perpendiculaire à l'axe de passage, de sorte à rapprocher les autres bossages vers le câble et ainsi obstruer de manière étanche la deuxième gorge.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 est une vue en coupe partielle d'un dispositif d'épissurage selon un mode de réalisation dans un état ouvert, et d'un câble.
La figure 2 est une vue en coupe partielle du dispositif d'épissurage de la figure 1 en cours de fermeture, et d'un câble.
La figure 3 est une vue en coupe partielle d'un dispositif d'épissurage de la figure 1dans un état fermé, et d'un câble.
La figure est une vue en perspective d'un joint d'étanchéité pour un dispositif d'épissurage.
La figure 5 est une vue en coupe partielle du joint d'étanchéité de la figure 4, dans un état ouvert.
La figure 6 est une vue de face de deux parois intermédiaires comprises dans le joint des figures 4 et 5.
La figure 7 est une vue partielle en coupe et en perspective du dispositif d'épissurage représenté sur les figures 1 à 3.

Sur l'ensemble des figures, les éléments similaires portent des références identiques.

### DESCRIPTION DETAILLEE DE L'INVENTION

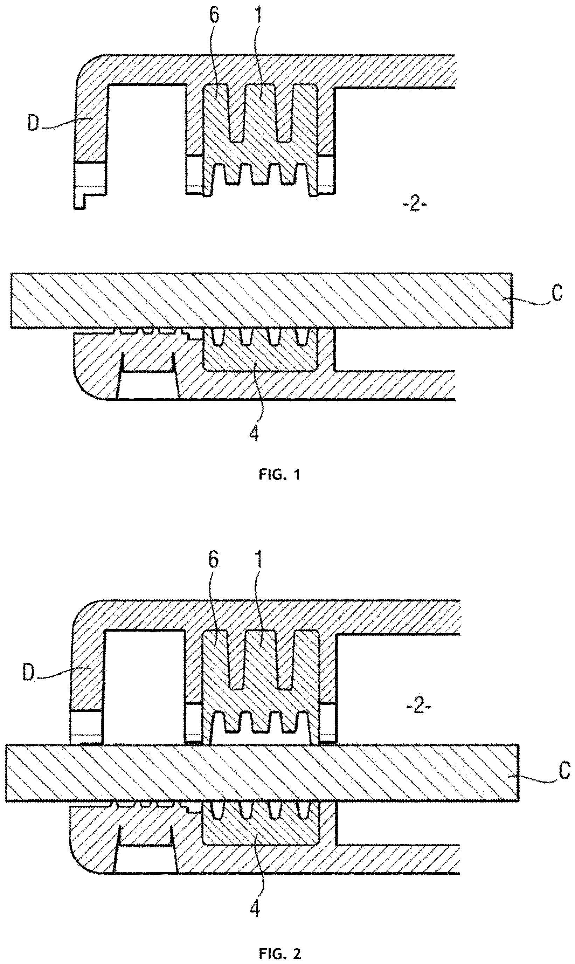

En référence aux **figures 1 à 3****,** un dispositif d'épissurage D comprend conventionnellement un boîtier définissant un espace interne 2. Le boîtier comprend une base et un couvercle. La base et le couvercle peuvent être rapprochés l'un de l'autre, de manière à fermer le boîtier, et écartés l'un de l'autre pour ouvrir ce boîtier (notamment dans le but d'insérer un câble C dans le boîtier). Lorsqu'un câble C traverse le boîtier, ce câble est pris en sandwich entre la base et le couvercle, et une portion de ce câble s'étend alors dans l'espace interne du boîtier. C'est dans cet espace interne qu'un épissurage d'un des câbles peut être réalisé, selon un procédé connu de l'état de la technique.

Le dispositif D comprend un joint d'étanchéité 1. Le joint 1 est disposé entre l'extérieur du dispositif D et l'espace interne 2. Ce joint 2 a pour fonction de constituer une interface étanche entre cet espace interne 2 et l'extérieur, de sorte que des éléments extérieurs tels que de l'eau ne puisse pas pénétrer dans l'espace interne 2 où se trouve la portion du câble C destinée à faire l'objet d'un épissurage.

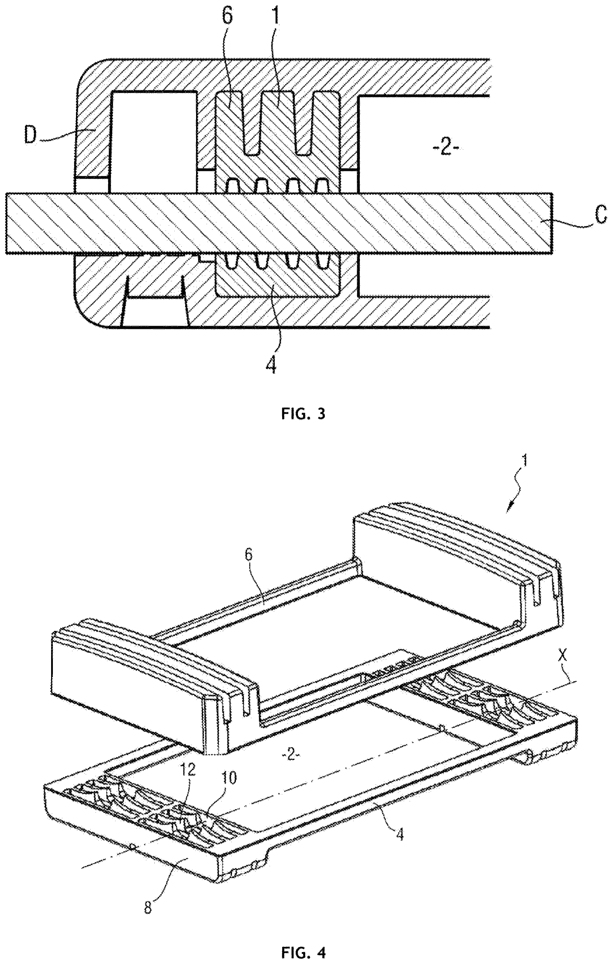

Le joint 1 définit au moins un accès à l'espace interne 2 depuis l'extérieur du joint. Dans le mode de réalisation de la **figure 4****,** qui est une vue complète du joint 1 en perspective, quatre accès de ce type sont ménagés dans le joint 1. Deux de ces accès sont alignés sur le même axe X, de manière à permettre à un premier câble, tel qu'un câble optique de traverser le boîtier. Les deux autres accès de joint sont également alignés, de manière à permettre à un deuxième câble, tel qu'un câble optique, de traverser le boîtier simultanément au premier câble.

Le joint 1 comprend lui-même une base 4 et un couvercle 6. La base 4 du joint est destinée à être fixée à la base du boîtier, et le couvercle 6 du joint est destiné à être fixé au couvercle du boîtier. En fait, lorsqu'un câble C traverse le boîtier en passant par deux des accès précités, ce câble sera pris en sandwich entre la base 4 et le couvercle 6 du joint 1 comme représenté en figure 3, ce qui permettra d'isoler l'espace interne 2 de l'extérieur du joint 1 et plus généralement de l'extérieur du dispositif D.

Le joint 1 est réalisé dans un matériau déformable. Ce matériau est par exemple un polymère type SEBS souple communément utilisé dans le domaine de la plasturgie.

Le joint 1 peut être réalisé par bi-injection dans un moule.

Le joint 1 comprend un ensemble de parois pour définir un accès à l'espace interne depuis l'extérieur du joint 1. Comme il est prévu quatre accès dans le joint 1 représenté sur la **figure 4****,** le joint 1 comprend en définitive quatre ensembles de parois. Dans ce qui va suivre, on va décrire plus précisément l'ensemble de parois associé à l'accès vers l'espace interne 2 qui se trouvent en bas à gauche de la **figure 4****,** sachant que les autres ensembles de parois associés aux autres accès vers l'espace interne 2, peuvent présenter les mêmes caractéristiques.

L'ensemble de parois définissant cet accès à l'espace interne 2 comprend les parois inférieures suivantes, qui sont formées dans la base 4 : une paroi externe 8 donnant à l'extérieur du joint 1, une paroi interne 10 donnant dans l'espace interne, et au moins une paroi intermédiaire 12 agencée entre la paroi interne et la paroi externe. Dans le mode de réalisation représenté sur la **figure 4****,** le nombre de paroi intermédiaires 12 est égal à trois. Ce nombre pourrait toutefois être différent, en particulier égal à un dans d'autres modes de réalisations.

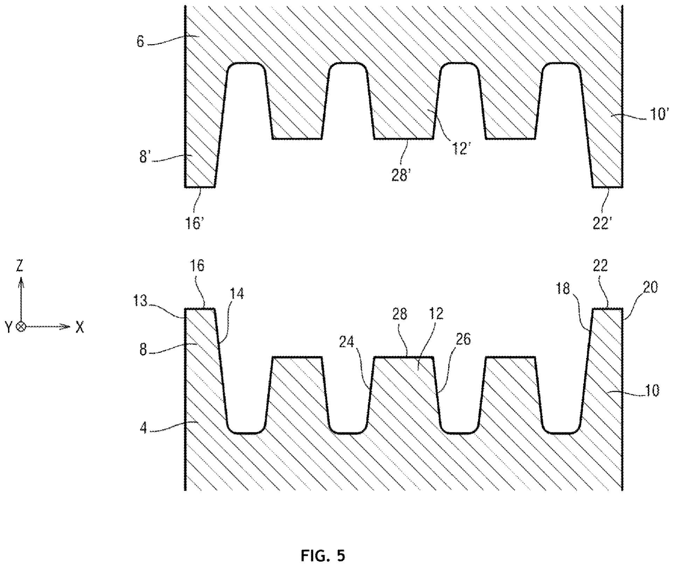

En référence à la **figure 5****,** on définit trois axes X, Y, Z associés à la base 4 du joint 1 formant un trièdre. Dans la suite, la dimension d'un élément du joint 1 est appelée « épaisseur » lorsqu'elle est mesurée parallèlement à l'axe X, « largeur » lorsqu'elle est mesurée parallèlement à l'axe Y, et « hauteur » lorsqu'elle est mesurée parallèlement à l'axe Z.

Les parois inférieures 8, 10, 12 susmentionnées sont agencées en succession le long de l'axe X, de manière à être traversées par un même câble C s'étendant alors le long de cet axe X. Les parois inférieures 8, 10, 12 sont séparées deux à deux par des espaces. Il existe ainsi un espace entre la paroi externe 8 et une première paroi intermédiaire 12, un autre espace entre la première paroi intermédiaire 12 et une deuxième paroi intermédiaire 12, un autre espace entre la deuxième paroi intermédiaire 12 et une troisième paroi intermédiaire 12, et un autre espace entre la troisième paroi intermédiaire 12 et la paroi interne 10.

L'ensemble des parois définissant un accès à l'espace interne depuis l'extérieur du joint 1 comprend également une succession de parois supérieures formées dans le couvercle 6 du joint 1. Cette succession de parois supérieures comprend : une paroi externe 8' donnant à l'extérieur du joint 1, une paroi interne 10' donnant dans l'espace interne, et au moins une paroi intermédiaire 12' agencée entre la paroi interne et la paroi externe.

Comme les parois inférieures 8, 10, 12, les parois supérieures 8', 10', 12' sont agencées en succession, de manière à être traversées par un même câble C, et sont séparées deux à deux par des espaces. Il existe ainsi un espace entre la paroi externe 8' et une première paroi intermédiaire 12', un autre espace entre la première paroi intermédiaire 12' et une deuxième paroi intermédiaire 12', un autre espace entre la deuxième paroi intermédiaire 12' et une troisième paroi intermédiaire 12', et un autre espace entre la troisième paroi intermédiaire 12' et la paroi interne 10'.

Les parois inférieures et supérieures forment des paires de parois mutuellement en regard. Chaque paire de parois est constituée d'une paroi inférieure et d'une paroi supérieure mutuellement en regard, et entrant mutuellement en contact lorsque la base 4 et le couvercle 6 du joint 1 sont rapprochés l'un de l'autre, comme cela sera décrit plus loin. Par convention, les deux parois d'une paire partagent la même référence numérique, avec le signe prime (') en suffixe pour la paroi supérieure considérée. Ainsi :
- Les parois 8, 8' forment une paire de parois externes ;
- Les parois 10, 10' forment une paire de parois internes ;
- Les parois 12, 12' forment au moins une paire de parois intermédiaires (trois paires dans le mode de réalisation illustré sur les figures).

On va maintenant décrire plus en détail la structure des parois inférieures 8, 10, 12.

La paroi externe 8 présente une surface avant 13 débouchant à l'extérieur du joint 1, une surface arrière 14 opposée à la surface avant 13, et une surface d'appui 16 formant un sommet de la paroi externe et reliant la surface avant 12 à la surface arrière 14.

La surface d'appui 16 est en regard d'une surface d'appui 16' de la paroi externe supérieure 8'. La surface d'appui 16 est complémentaire de la surface d'appui 16', par exemple plane.

La paroi interne 10 présente une forme similaire à celle de la paroi externe 8. La paroi interne 10 présente une surface avant 18, une surface arrière 20 opposée à la surface avant 18 et donnant dans l'espace interne 2, et une surface d'appui 22 formant un sommet de la paroi interne 10 reliant la surface avant 18 à la surface arrière 20.

La surface d'appui 22 est en regard d'une surface d'appui 22' de la paroi interne supérieure 10'. La surface d'appui 22 est complémentaire de la surface d'appui 22', par exemple plane.

Les surfaces d'appui 16, 22 de la paroi interne 8 et de la paroi externe 10 sont par exemple coplanaires.

Chaque paroi intermédiaire 12 présente une surface avant 24, une surface arrière 26, et une surface d'appui 28 formant un sommet de la paroi intermédiaire 12.

La surface d'appui 28 d'une paroi intermédiaire 12 est en regard d'une surface d'appui 28' d'une paroi intermédiaire 12' (supérieure).

La surface d'appui 28 d'une paroi intermédiaire 12 ne présente pas la même forme que les surfaces d'appui 16 et 22, ce qui est particulièrement visible sur la **figure 5** qui montre l'une des parois intermédiaire vue de face.

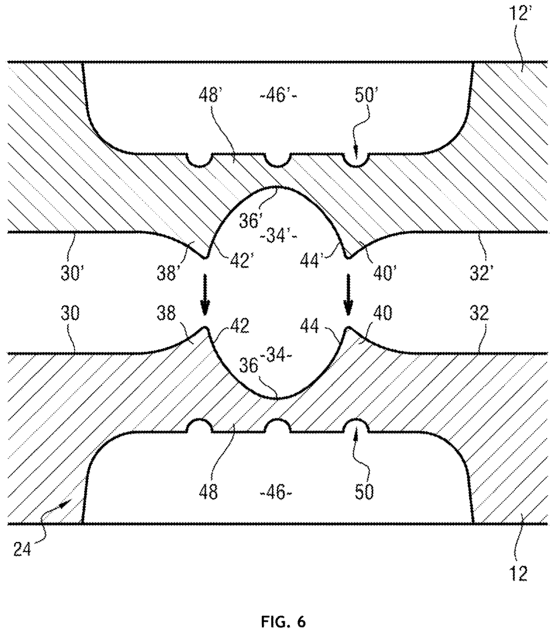

Comme le montre la figure 6, La surface d'appui 28 présente deux portions de surface planes 30, 32. Ces deux portions de surface sont normales à l'axe Z.

Les deux portions de surface 30, 32 sont par exemple coplanaires avec la surface d'appui 16 et/ou avec la surface d'appui 22.

La paroi intermédiaire définit une gorge 34 débouchant dans la surface avant 24, dans la surface arrière 26 et dans la surface d'appui 28. La gorge 34 s'étend autour de l'axe X, dans le sens où l'axe X traverse la gorge.

La surface d'appui 28 comprend par ailleurs une portion de surface concave 36 qui forme le fond de la gorge 34.

La paroi intermédiaire 12 comprend par ailleurs deux bossages 38, 40. Ces deux bossages 38, 40 sont formés dans la surface d'appui 28, et sont situés de part et d'autre de la gorge 34. En d'autres termes, la gorge 34 se trouve entre les deux bossages 38, 40.

Le bossage 38 est situé entre la portion de surface plane 30 et la gorge 34. Le bossage 38 présente une surface concave 42 reliée au la portion de surface concave 36 formant le fond de la gorge.

Similairement, l'autre bossage 40 est situé entre la portion de surface plane 32 et la gorge 34. Le bossage 40 présente une surface concave 44 également reliée à la portion de surface concave 36 formant le fond de la gorge.

Les deux surfaces concaves 42, 44 des bossages 38, 40 sont mutuellement en regard et délimitent la gorge au même titre que la portion de surface 36.

Les bossages 38, 40 ont des formes adaptées pour se rapprocher d'un câble engagé à travers la gorge sous l'effet d'un effort de compression exercé par une paroi supérieure 12' sur les bossages dans une direction de compression parallèle à l'axe Z (cet effort étant représenté par deux flèches descendantes sur la **figure 6**).

En particulier, la surface concave 42, 44 est agencée pour que son rayon de courbure se réduise sous l'effet de cet effort de compression exercé par la paroi supérieure 12'.

La paroi intermédiaire 12 définit par ailleurs une cavité 46 distincte de la gorge 34. Cette cavité 46 est séparée de la gorge 34 par une partie 48 de la paroi intermédiaire 12 qui délimite le fond de la gorge 34, et qu'on appellera par convention « partie séparatrice » dans la suite. La cavité 46 débouche dans la surface avant 24 et dans la surface arrière 26 de la paroi intermédiaire 12.

La partie séparatrice 48 est agencée par rapport aux bossages 38, 40 pour fléchir sous l'effet de l'effort de compression exercé sur les bossages, de sorte à entraîner une réduction de la cavité 46. Cette configuration permet de favoriser une flexion de la partie séparatrice 48, donc une réduction du rayon de courbure de la portion de surface 36 formant le fond de la gorge 34. Ceci a pour conséquence de favoriser une mise en contact de la paroi intermédiaire 12 avec un câble agencé dans la gorge 34 sur une plus grande surface, lorsque notamment ce câble présente un diamètre plus important que la gorge 34.

De préférence, la partie séparatrice 48 définit au moins une rainure 50 débouchant dans la cavité 46, la rainure 50 s'étendant parallèlement à l'axe X. Dans le mode de réalisation de la **figure 6****,** les rainures 50 sont au nombre de trois. Chaque rainure 50 a pour effet de guider plus efficacement la déformation de la paroi intermédiaire 12 sous l'effet de l'effort de compression précité.

Toutes les parois intermédiaires 12 agencées entre la paroi externe 8 et la paroi interne 10 peuvent avoir la forme et les propriétés décrites ci-dessus.

Chaque parois intermédiaire 12' (donc supérieure) présentent les mêmes caractéristiques que le parois intermédiaire 12 (inférieure) en regard, notamment une gorge 34' entourée par deux bossages 38', 40'. La surface d'appui 28' comprend également deux portions de surface planes 30', 32', ainsi qu'une portion de surface concave 36' formant le fond de la gorge 34'.

Les parois 12, 12' formant une paire de parois sont par exemple symétriques par rapport à un plan de symétrie horizontal s'étendent entre la base 4 et le couvercle 6 du joint 1, parallèle au plan (X, Y).

Le joint 1 représenté sur les **figures 1****,** **4****,** **5** **et** **6** est dans un état ouvert, dans lequel la base 4 et le couvercle 6 sont écartés l'un de l'autre.

Ce joint 1 peut être fermé par mise en contact mutuelle de la base 4 et du couvercle, comme le montre les **figures 2****,** **3** **et** **7****.** Plus précisément, chaque paroi inférieure 8, 10 ou 12 est mise en contact avec la paroi supérieure 8', 10' ou 12' en regard au cours de la fermeture.

On va dans un premier temps décrire la fermeture du joint 1 en l'absence de câble.

Au cours de cette fermeture, une paroi intermédiaire inférieure 12 et la paroi intermédiaire supérieure 12' en regard adoptent une position jointive, lorsque les deux bossages 38, 40 de l'une viennent en contact avec les deux bossages 38', 40' de l'autre. Les gorges 34, 34' forment alors ensemble un orifice intermédiaire s'étendant autour de l'axe X (absent pour le moment). A ce stade, les parois intermédiaires 12, 12' ne sont pas encore déformées, et les portions de paroi planes 30, 30', 32, 32' sont encore à distance les uns des autres.

En poursuivant cette fermeture, c'est-à-dire en rapprochant davantage la base 4 et le couvercle 6 du joint, un effort de compression parallèlement à l'axe Y est exercé par la paroi supérieure 12' sur la paroi inférieure 12. Ceci entraine une déformation de la paroi inférieure 12 et de la gorge 34. Symétriquement, un effort de compression parallèlement à l'axe Y est exercé par la paroi supérieure 12 sur la paroi supérieure 12'. Ceci entraine donc également une déformation de la paroi supérieure 12' et de la gorge 34'.

Dans ce qui suit, on détaille les déformations subies par la paroi inférieure 12.

Premièrement, il se produit une déformation des bossages 38, 40. Les bossages 38, 40 tendent à se rapprocher l'un de l'autre au cours de leur déformation, ce qui a pour effet de réduire la largeur de la gorge 34 qui les sépare (et donc le diamètre de l'orifice intermédiaire formé par les gorges 34, 34'). En outre, les surfaces concaves 42, 44 voient leur rayon de courbure se réduire.

Deuxièmement, il se produit un fléchissement de la partie séparatrice 48 tel que la cavité se réduit. La partie séparatrice s'incurve, ce qui réduit le rayon de courbure de la portion de surface 36 formant le fond de la gorge 34.

Les mêmes déformations se produisent symétriquement dans la paroi intermédiaire supérieure.

Le phénomène qui précède se produit également pour chaque autre paire de parois intermédiaires 12, 12' que comprend le joint 1.

A un stade ultérieur de fermeture sans câble, les portions de surface 30, 30', et les portions de surface 32, 32' viennent mutuellement en contact.

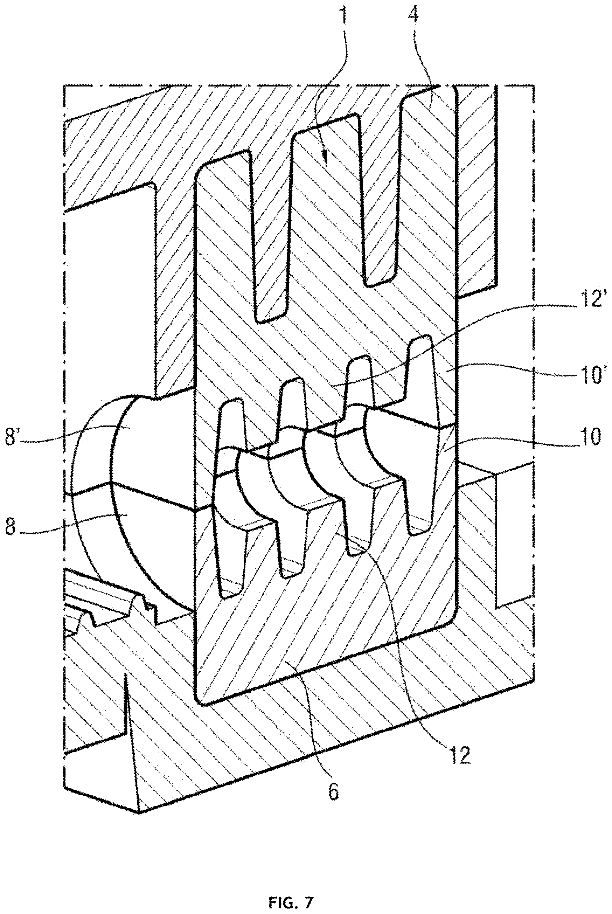

En outre, les surfaces d'appui 16, 16' des parois externes 8, 8' viennent mutuellement en contact au cours de la fermeture du joint 1. Les surfaces d'appui 16, 16' étant complémentaires, les deux parois externes 8, 8' forment alors ensemble une cloison étanche (configuration fermée), visible sur la **figure 7****.**

Similairement, les surfaces d'appui 22, 22' des parois internes 10, 10' viennent mutuellement en contact au cours de la fermeture du joint 1. Les surfaces d'appui 22, 22' étant complémentaires, les deux parois internes 8, 8' forment alors ensemble une autre cloison étanche.

Ainsi, lorsque le joint est fermé en l'absence de câble, les parois externes 8, 8' et internes 10, 10' permettent d'assurer l'étanchéité d'un dispositif d'épissurage alors qu'aucun câble ne le traverse pas.

On va maintenant décrire la fermeture du joint 1 en présence d'un câble C, par exemple un câble optique. Dans ce qui suit, on supposera que le câble C est de section circulaire.

Un utilisateur positionne le câble C sur la succession de parois inférieures 8, 10, 12 formée dans la base 4 du joint 1, de sorte que le câble repose sur les surfaces d'appui 16, 22 (voir **figure 1**). A ce stade, le câble surplombe la gorge 34 de chaque paroi intermédiaire 12, et se trouve entre les bossages 38, 40 de chaque paroi intermédiaire 12.

L'utilisateur referme ensuite le joint 1 par rapprochement mutuel du couvercle 6 et de la base 4 (voir **figure 2**).

Au cours de cette fermeture, le câble C se retrouve pris en sandwich entre les surfaces 16, 16'. Le câble C exerce une pression sur ces surfaces 16, 16', ce qui entraine un écrasement ou un fléchissement des parois externes 8, 8', et la formation d'un orifice externe pour le câble entre les parois 8, 8' (configuration ouverte).

Au cours de cette fermeture, le câble se retrouve par ailleurs pris en sandwich entre les surfaces 22, 22'. Le câble exerce une pression sur ces surfaces 22, 22', ce qui entraine un écrasement ou un fléchissement des parois internes 10, 10', et la formation d'un orifice interne pour le câble entre les parois 10, 10' (configuration ouverte).

Par ailleurs, au cours de cette fermeture, les parois intermédiaires 12, 12' atteignent leur position jointive, dans laquelle les gorge 34, 34' forment ensemble un orifice intermédiaire, avec le câble qui traverse cet orifice intermédiaire.

Les parois intermédiaires 12, 12' subissent les déformations décrites plus haut, notamment au niveau de leur bossages 38, 40, 38', 40', et de leur partie séparatrice 48, 48'.

Le rapprochement mutuel des bossages 38, 40 et le rapprochement mutuel des bossages 38', 40' permettent d'obturer d'éventuels jours latéraux situés de part et d'autre du câble dans l'orifice intermédiaire, c'est-à-dire entre le câble et chaque bossage. En particulier, la réduction du rayon de courbure des surfaces 36, 42, 44, 36', 42', 44' permet de faciliter cette obturation, pour différents diamètres de câble.

A l'issue de la fermeture du joint 1 en présence du câble C, le câble C traverse successivement les orifices suivants alignés les uns par rapport aux autres le long de l'axe X, depuis l'extérieur du joint 1 jusqu'à l'espace interne 2 : l'orifice externe, chaque orifice intermédiaire, l'orifice interne. Les orifices intermédiaires sont obturés de manière étanche par le câble qui les traverse.

Ainsi, lorsque le câble C est présent, les parois intermédiaires 12, 12' permettent au joint 1 d'assurer sa fonction d'étanchéité car elles épousent la forme du câble. Les parois externes 8, 8', ou externes 10, 10', ne remplissent pas la fonction d'étanchéité en raison du fait que les orifices interne et externe n'ont pas forcément une forme qui épouse parfaitement le contour du câble qui les traverse dans leur configuration ouverte.

Lorsque le câble n'est pas présent, les parois intermédiaires 12, 12' n'entrent pas dans la fonction d'étanchéité, ce sont les parois externes 8, 8', ou externes 10, 10', qui remplissent cette fonction.

Le joint 1 décrit précédemment peut faire l'objet de variantes non illustrées. On précise en particulier que les parois internes et externe sont avantageuses pour rendre le joint étanche en l'absence de câble, mais restent facultatives pour protéger le lieu d'épissurage d'un câble. En effet, ces parois permettent juste d'assurer une étanchéité en l'absence d'un câble, et sans qu'il soit nécessaire de manipuler un élément amovible tel qu'un bouchon.

## Revendications

1. Joint (1) d'étanchéité pour dispositif d'épissurage, le joint (1) d'étanchéité comprenant une première paroi (12) définissant une première gorge (34), et une deuxième paroi (12') définissant une deuxième gorge (34'), dans lequel :
- la première paroi (12) et la deuxième paroi (12') sont adaptées pour être positionnées l'une contre l'autre dans une position jointive dans laquelle la première gorge (34) et la deuxième gorge (34') forment ensemble un orifice s'étendant autour d'un axe de passage (X),
- la première paroi (12) comprend deux bossages (38, 40) déformables délimitant entre eux la première gorge (34), les deux bossages étant adaptés pour se rapprocher d'un câble engagé à travers l'orifice sous l'effet d'un effort de compression exercé sur les bossages (38, 40) par la deuxième paroi (12') dans une direction de compression (Z) perpendiculaire à l'axe de passage (X), lorsque que les deux parois (12, 12') sont dans la position jointive,
**caractérisé en ce que** la première paroi (12) comprend une partie (48) délimitant un fond de la première gorge, et séparant la première gorge (34) d'une cavité (46), la partie (48) étant agencée par rapport aux bossages pour fléchir sous l'effet de l'effort de compression exercé sur les bossages, de sorte à entraîner une réduction de la cavité.

2. Joint (1) d'étanchéité selon la revendication précédente, dans lequel chaque bossage (38, 40) présente une surface concave (42, 44) délimitant la première gorge (34), et a une forme adaptée pour qu'un rayon de courbure de la surface concave (42, 44) se réduise sous l'effet de l'effort de compression.

3. Joint (1) d'étanchéité selon l'une des revendications précédentes, dans lequel la partie (48) définit au moins une rainure (50) débouchant dans la cavité (46), la rainure s'étendant parallèlement à l'axe de passage (X).

4. Joint (1) d'étanchéité selon l'une des revendications précédentes, dans lequel :
- la deuxième paroi (12') comprend deux autres bossages (38', 40') déformables délimitant entre eux la deuxième gorge (34'), et ayant des formes adaptées pour se rapprocher d'un câble engagé à travers l'orifice sous l'effet d'un effort de compression exercé sur les autres bossages par la première paroi (12) dans la direction (Z) de compression perpendiculaire à l'axe de passage (X), lorsque que les deux parois (12, 12') sont dans la position jointive.

5. Joint (1) d'étanchéité selon l'une des revendications précédentes, comprenant par ailleurs une troisième paroi (8) et une quatrième paroi (8') adaptées pour adopter, pendant que la première paroi (12) et la deuxième paroi (12') sont dans la position jointive :
- une configuration fermée dans laquelle la troisième paroi et la quatrième paroi forment ensemble une cloison étanche,
- une configuration ouverte dans laquelle la troisième paroi et la quatrième paroi forment ensemble un orifice propre à être traversé par un câble traversant simultanément l'orifice formé par la première gorge (34) et la deuxième gorge (34').

6. Joint (1) d'étanchéité selon la revendication précédente, dans lequel la troisième paroi (8) et la quatrième paroi (8') sont adaptées pour passer de la configuration fermée à la configuration ouverte en se déformant sous l'effet d'une compression exercée par le câble sur la troisième paroi et sur la quatrième paroi.

7. Joint (1) d'étanchéité selon l'une des revendications 5 et 6, comprenant :
- une base (4) comprenant une (12) parmi la première paroi (12) et la deuxième paroi (12'), et une (8) parmi la troisième paroi et la quatrième paroi,
- un couvercle (6) comprenant l'autre (12') parmi la première paroi et la deuxième paroi, et l'autre (8') parmi la troisième paroi et la quatrième paroi.

8. Joint (1) d'étanchéité selon l'une des revendications 5 à 7, dans lequel la première paroi (12), la deuxième paroi (12'), la troisième paroi (8) et la quatrième paroi (8') sont agencées pour que les deux orifices puissent être alignés dans la position jointive.

9. Joint (1) d'étanchéité selon l'une des revendications 5 à 8, comprenant au moins une paire supplémentaire de parois adaptée pour définir un orifice propre à être traversé par un câble traversant simultanément l'orifice formé par la première gorge (34) et la deuxième gorge (34'), ainsi que l'orifice formé par la troisième paroi et la quatrième paroi.

10. Dispositif d'épissurage (D) d'un câble (C), tel qu'un câble optique, le dispositif d'épissurage (D) comprenant un joint (1) d'étanchéité selon l'une des revendications précédentes agencé entre l'extérieur du dispositif d'épissurage (D) et un espace (2) ménagé à l'intérieur du dispositif.

11. Procédé comprenant :
- engager un câble, tel qu'un câble optique, à travers la première gorge (34) d'un joint (1) d'étanchéité selon l'une des revendications 1 à 9,
- positionner la première paroi (12) et la deuxième paroi (12') du joint (1) d'étanchéité dans la position jointive, de sorte que le câble traverse l'orifice défini par la première gorge (34) et la deuxième gorge (34'),
- comprimer les parois l'une vers l'autre, alors que les deux parois sont dans la position jointive, de sorte que la deuxième paroi (12') exerce un effort de compression sur les bossages dans une direction de compression (Z) perpendiculaire à l'axe de passage (X), de sorte à rapprocher les bossages (38, 40) vers le câble et ainsi obstruer de manière étanche la première gorge (34).

12. Procédé selon la revendication précédente, dans lequel le joint (1) est conforme à la revendication 4, et dans les parois sont comprimées l'une vers l'autre de sorte que la deuxième paroi exerce un effort de compression sur les bossages dans la direction (Z) de compression perpendiculaire à l'axe de passage, de sorte à rapprocher les autres bossages (38', 40') vers le câble et ainsi obstruer de manière étanche la deuxième gorge (34').

## Patentansprüche

1. Dichtung (1) für eine Spleißvorrichtung, wobei die Dichtung (1) eine erste Wand (12), die eine erste Nut (34) definiert, und eine zweite Wand (12'), die eine zweite Nut (34') definiert, umfasst, wobei:
- die erste Wand (12) und die zweite Wand (12') dazu geeignet sind, gegeneinander in einer aneinander anstoßenden Position positioniert zu sein, in der die erste Nut (34) und die zweite Nut (34') zusammen eine Öffnung bilden, die sich um eine Durchgangsachse (X) erstreckt,
- die erste Wand (12) zwei verformbare Vorsprünge (38, 40) umfasst, die zwischen sich die erste Nut (34) begrenzen, wobei die beiden Vorsprünge dazu geeignet sind, dass sie sich unter der Wirkung einer Druckkraft, die von der zweiten Wand (12') in einer Druckrichtung (Z) senkrecht zur Durchgangsachse (X) auf die Vorsprünge (38, 40) ausgeübt wird, einem durch die Öffnung eingeführten Kabel annähern, wenn sich die beiden Wände (12, 12') in der aneinander anstoßenden Position befinden,
**dadurch gekennzeichnet, dass** die erste Wand (12) einen Abschnitt (48) umfasst, der einen Boden der ersten Nut begrenzt und die erste Nut (34) von einem Hohlraum (46) trennt, wobei der Abschnitt (48) in Bezug auf die Vorsprünge derart eingerichtet ist, dass er sich unter der Wirkung der auf die Vorsprünge ausgeübten Druckkraft biegt, um eine Verkleinerung des Hohlraums zu bewirken.

2. Dichtung (1) nach vorhergehendem Anspruch, wobei jeder Vorsprung (38, 40) eine konkave Oberfläche (42, 44) aufweist, die die erste Nut (34) begrenzt, und eine Form hat, die geeignet ist, dass sich ein Krümmungsradius der konkaven Oberfläche (42, 44) unter der Wirkung der Druckkraft verringert.

3. Dichtung (1) nach einem der vorhergehenden Ansprüche, wobei der Abschnitt (48) mindestens eine Rille (50) definiert, die in den Hohlraum (46) mündet, wobei sich die Rille parallel zur Durchgangsachse (X) erstreckt.

4. Dichtung (1) nach einem der vorhergehenden Ansprüche, wobei:
- die zweite Wand (12') zwei weitere verformbare Vorsprünge (38', 40') umfasst, die zwischen sich die zweite Nut (34') begrenzen und Formen aufweisen, die geeignet sind, sich unter der Wirkung einer Druckkraft, die von der ersten Wand (12) in der Druckrichtung (Z) senkrecht zur Durchgangsachse (X) auf die weiteren Vorsprünge ausgeübt wird, einem durch die Öffnung eingeführten Kabel anzunähern, wenn sich die beiden Wände (12, 12') in der aneinander anstoßenden Position befinden.

5. Dichtung (1) nach einem der vorhergehenden Ansprüche, umfassend ferner eine dritte Wand (8) und eine vierte Wand (8'), die dazu geeignet sind, während sich die erste Wand (12) und die zweite Wand (12') in der aneinander anstoßenden Position befinden, einzunehmen:
- eine geschlossene Konfiguration, in der die dritte Wand und die vierte Wand zusammen eine dichte Trennwand bilden,
- eine offene Konfiguration, in der die dritte Wand und die vierte Wand zusammen eine Öffnung bilden, die geeignet ist, von einem Kabel durchquert zu werden, das gleichzeitig die von der ersten Nut (34) und der zweiten Nut (34') gebildete Öffnung durchquert.

6. Dichtung (1) nach vorhergehendem Anspruch, wobei die dritte Wand (8) und die vierte Wand (8') geeignet sind, aus der geschlossenen Konfiguration in die geöffnete Konfiguration zu wechseln, indem sie sich unter der Wirkung eines Drucks verformen, der von dem Kabel auf die dritte Wand und die vierte Wand ausgeübt wird.

7. Dichtung (1) nach einem der Ansprüche 5 und 6, umfassend:
- einer Basis (4), die eine (12) von der ersten Wand (12) und der zweiten Wand (12') und eine (8) von der dritten Wand und der vierten Wand umfasst,
- einen Deckel (6), der die andere (12') von der ersten Wand und der zweiten Wand und die andere (8') von der dritten Wand und der vierten Wand umfasst.

8. Dichtung (1) nach einem der Ansprüche 5 bis 7, wobei die erste Wand (12), die zweite Wand (12'), die dritte Wand (8) und die vierte Wand (8') derart eingerichtet sind, dass die beiden Öffnungen in der aneinander anstoßenden Position aufeinander ausgerichtet werden können.

9. Dichtung (1) nach einem der Ansprüche 5 bis 8, umfassend mindestens ein zusätzliches Paar von Wänden, die dazu geeignet sind, eine Öffnung zu definieren, die geeignet ist, von einem Kabel durchquert zu werden, das gleichzeitig die von der ersten Nut (34) und der zweiten Nut (34') gebildete Öffnung sowie durch die von der dritten Wand und der vierten Wand gebildete Öffnung durchquert.

10. Vorrichtung zum Spleißen (D) eines Kabels (C), wie beispielsweise eines optischen Kabels, wobei die Spleißvorrichtung (D) eine Dichtung (1) nach einem der vorhergehenden Ansprüche umfasst, die zwischen der Außenseite der Spleißvorrichtung (D) und einem im Inneren der Vorrichtung ausgebildeten Raum (2) angeordnet ist.

11. Verfahren, umfassend:
- Einsetzen eines Kabels, wie z. B. eines optischen Kabels, durch die erste Nut (34) einer Dichtung (1) nach einem der Ansprüche 1 bis 9,
- Positionieren der ersten Wand (12) und der zweiten Wand (12') der Dichtung (1) in der aneinander anstoßenden Position, so dass das Kabel die von der ersten Nut (34) und der zweiten Nut (34') definierte Öffnung durchquert,
- Zusammendrücken der Wände gegeneinander, während sich die beiden Wände in der aneinander anstoßenden Position befinden, so dass die zweite Wand (12') eine Druckkraft auf die Vorsprünge in einer Druckrichtung (Z) senkrecht zur Durchgangsachse (X) ausübt, so dass die Vorsprünge (38, 40) in Richtung des Kabels angenähert werden und dadurch die erste Nut (34) dicht verschlossen wird.

12. Verfahren nach vorhergehendem Anspruch, wobei die Dichtung (1) nach Anspruch 4 ist und wobei die Wände aneinandergedrückt werden, so dass die zweite Wand eine Druckkraft auf die Vorsprünge in der Druckrichtung (Z) senkrecht zur Durchgangsachse ausübt, um die anderen Vorsprünge (38', 40') in Richtung des Kabels anzunähern und so die zweite Nut (34') dicht zu verschließen.

## Claims

1. Seal (1) for a splicing device, the seal (1) comprising a first wall (12) defining a first groove (34) and a second wall (12') defining a second groove (34'), wherein:
- the first wall (12) and the second wall (12') are adapted to be positioned against each other in an abutting position in which the first groove (34) and the second groove (34') together form an opening extending about a passage axis (X),
- the first wall (12) comprises two deformable projections (38, 40) delimiting between them the first groove (34), the two projections being suitable for approaching a cable inserted through the opening under the action of a compressive force exerted by the second wall (12') on the projections (38, 40) in a compressive direction (Z) perpendicular to the passage axis (X) when the two walls (12, 12') are in the abutting position,
**characterized in that** the first wall (12) comprises a portion (48) defining a bottom of the first groove and separating the first groove (34) from a cavity (46), the portion (48) being adapted to flex with respect to the protrusions under the action of the compressive force exerted on the protrusions to cause a reduction in the size of the cavity.

2. Seal (1) according to the preceding claim, wherein each projection (38, 40) comprises a concave surface (42, 44) defining the first groove (34) and has a shape suitable for a radius of curvature of the concave surface (42, 44) to decrease under the action of the compressive force.

3. Seal (1) according to any one of the preceding claims, wherein the portion (48) defines at least one groove (50) opening into the cavity (46), the groove extending parallel to the passage axis (X).

4. Seal (1) according to any one of the preceding claims, wherein:
- the second wall (12') comprises two further deformable projections (38', 40') which delimit between them the second groove (34') and have shapes suitable for approaching a cable inserted through the opening under the action of a compressive force exerted by the first wall (12) on the further projections in the compressive direction (Z) perpendicular to the passage axis (X) when the two walls (12, 12') are in the abutting position.

5. Seal (1) according to any one of the preceding claims, further comprising a third wall (8) and a fourth wall (8') adapted to be occupied while the first wall (12) and the second wall (12') are in the abutting position:
- a closed configuration in which the third wall and the fourth wall together form a tight partition,
- an open configuration in which the third wall and the fourth wall together form an opening adapted to be traversed by a cable which simultaneously traverses the opening formed by the first groove (34) and the second groove (34') .

6. Seal (1) according to the preceding claim, wherein the third wall (8) and the fourth wall (8') are adapted to change from the closed configuration to the open configuration by deforming under the action of a pressure exerted by the cable on the third wall and the fourth wall.

7. Seal (1) according to any one of claims 5 and 6, comprising:
- a base (4) comprising one (12) of the first wall (12) and the second wall (12') and one (8) of the third wall and the fourth wall,
- a cover (6) comprising the other (12') of the first wall and the second wall and the other (8') of the third wall and the fourth wall.

8. Seal (1) according to any one of claims 5 to 7, wherein the first wall (12), the second wall (12'), the third wall (8) and the fourth wall (8') are arranged such that the two openings can be aligned with each other in the abutting position.

9. Seal (1) according to any one of claims 5 to 8, comprising at least one additional pair of walls adapted to define an opening adapted to be traversed by a cable that simultaneously traverses the opening formed by the first groove (34) and the second groove (34') and through the opening formed by the third wall and the fourth wall.

10. A device for splicing (D) a cable (C), such as an optical cable, wherein the splicing device (D) comprises a seal (1) according to one of the preceding claims, which is arranged between the outside of the splicing device (D) and a space (2) formed inside the device.

11. Method comprising:
- Inserting a cable, such as an optical cable, through the first groove (34) of a seal (1) according to any one of claims 1 to 9,
- Positioning the first wall (12) and the second wall (12') of the seal (1) in the abutting position so that the cable passes through the opening defined by the first groove (34) and the second groove (34'),
- Pressing the walls together against each other while the two walls are in the abutting position, so that the second wall (12') exerts a compressive force on the projections in a pressure direction (Z) perpendicular to the passage axis (X), so that the projections (38, 40) are brought closer in the direction of the cable and the first groove (34) is thereby tightly closed.

12. Method according to the preceding claim, wherein the seal (1) is according to claim 4 and wherein the walls are pressed together so that the second wall exerts a compressive force on the projections in the pressure direction (Z) perpendicular to the passage axis in order to approximate the other projections (38', 40') in the direction of the cable and thus tightly close the second groove (34').
